# EUROPEAN PATENT SPECIFICATION

(11) **EP 2 008 399 B1**
(45) Date of publication and mention of the grant of the patent: **09.09.2009**
(21) Application number: 06807310.5
(22) Date of filing: 16.10.2006
(51) Int. Cl.: H04L 12/18

(54) **METHOD AND ARRANGEMENT IN A COMMUNICATIONS NETWORK**
VERFAHREN UND ANORNDUNG IN EINEM KOMMUNIKATIONSNETZ
PROCEDE ET DISPOSITION DANS UN RÉSEAU DE COMMUNICATIONS

(30) Priority: 18.04.2006 US 745026 P; 22.08.2006 US 466297
(43) Date of publication of application: 31.12.2008
(73) Proprietor: Sony Ericsson Mobile Communications AB, 221 88 Lund (SE)
(72) Inventor: ANDREASSON, Markus, SE-226 48 Lund (SE)
(74) Representative: Valea AB
(86) International application number: PCT/EP2006/067455
(87) International publication number: WO 2007/118514

(56) References cited:
- WO-A2-00/39978
- US-B1- 6 564 244

## Description

### TECHNICAL FIELD OF THE INVENTION

The present invention relates to a method and arrangement in a portable communication device and a method and arrangement in a chat server. In particular it relates to managing a chat rooms associated with an ongoing state in an activity application.

### DESCRIPTION OF RELATED ART

It is known within the field of portable communication devices such as e.g. cellular phones, to use them in different activities such as listen to music or radio, playing games, taking a photo, watching videos or TV, watching a specific site at the internet etc. This is possible if the portable communication device comprises an activity application such as a music, radio, game, video or TV application.

It is furthermore known within the field of portable communication devices, such as e.g. cellular phones, to use them for instant messaging or "chat" in communication sessions between two or more different parties. This requires that the mobile communication device comprises a so-called chat application. Introduction of the chat service requires that the user has obtained the settings required by the service for his communication device. The settings are needed for being in connection with a special instant message server and for messaging with other message users through the server. Such settings are e.g. the address, the user identity (ID) and the password. The user has to decide which chat room to enter when connecting to such a server. There is a problem that it is not feasible to chat with another user during an ongoing activity in a portable communication device due to e.g. lack of screen size.

A part of a solution to the problem is solved in the PC technical field in WO2004038595, depicting a chat room method and system which permits computer users to communicate with each other while browsing any web site. This invention permits a computer user in the chat room to change web sites and communicate with other computer users on the chat room who are also browsing the same web site. However, in this solution, when the user finds a web site, which web site the user wishes to chat with other users about, the user must first start the chat function and thereafter browse to the website again within the chat application. This is however cumbersome and is only about web sites.

WO 00/39978 discloses a general concept of user context based chat rooms wherein it is the chat server that defines which rooms should be created and which users should go in which rooms based on the time of enter and other parameters provided by each user.

It would therefore be advantageous from a portable communication device user perspective to, during an activated specific state in any activity application, in an easy way be able to chat with another user being active in the same state.

### SUMMARY OF THE INVENTION

It is therefore an object of the present invention to provide a mechanism that in an easy way provides a chat session between two users, using the same ongoing state in an activity application.

According to a first aspect of the present invention this object is achieved by a method in a first portable communication device, for managing a chat room. The fist device comprises a chat client and an activity application, which activity application comprises a chat start application. The first device is adapted to connect to a chat server via an infrastructure network. The method comprises the steps of: activating the activity application; setting the activated activity application in a specific state; and activating the chat start application which triggers the creation of a specific keyword associated with the activated activity application set in a specific state, and which further triggers the chat client to send a chat request to the chat server, which request comprises the specific keyword.

According to a second aspect of the present invention this object is achieved by an arrangement in a first portable communication device: The arrangement comprises a chat client and an activity application. The activity application is settable in a state, and comprises a chat start application. The first device is adapted to connect to a chat server via an infrastructure network. The first device arrangement further comprises a first input means adapted to activate the activity application and further adapted to set the activated activity application in a specific state. The activity application comprises a second input means for activating the chat start application, which when activated is adapted to trigger a keyword generating unit to create of a specific keyword associated with the activated activity application set in a specific state, and which further when activated is adapted to trigger the chat client to send a chat request to the chat server. The request comprises the specific keyword.

According to a third aspect of the present invention this object is achieved by a method in a chat server, for managing a chat room. The chat server is comprised in an infrastructure network and is adapted to communicate with a chat client in a first portable communications device via the infrastructure network. The method comprises the steps of: receiving from the chat client of the first device, a chat request comprising a specific keyword, which specific keyword is associated with an activated activity application set in a specific state by a user of the first device; and creating a specific chat room associated with the specific state of the activity application according to the specific keyword, if no such chat room already exists.

According to a fourth aspect of the present invention this object is achieved by an arrangement in a chat server. The chat server is comprised in an infrastructure network and the chat server is adapted to communicate with a chat client in a first portable communications device via the infrastructure network. The chat server arrangement comprises a chat request receiving unit adapted to receive a chat request from the chat client of the first device. The chat request comprising a specific keyword, which specific keyword is associated with an activated activity application set in a specific state by a user of the first device. The chat server arrangement further comprises a chat room managing unit adapted to create a specific chat room associated with the specific state of the activity application according to the specific keyword.

Since a keyword is created in any user portable device, which keyword is associated with an activated activity application set in a specific state by users of the device, and the keyword is sent to the chat server, the chat server can create a chat room associated to an activated activity application set in a specific state. This makes it possible to set up a chat session between two users during using the same ongoing state in an activity application.

An advantage of the present invention is that the user of the portable device, by means of only one activity can start a chat session based on an ongoing state in his/her activity application.

Another advantage is that the present invention is applicable in any activity application.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

Embodiments of the present invention will now be described in more detail in relation to the enclosed drawings, in which:
- Figure 1: schematically shows a first portable communication device communicating with a second communication device via an infrastructure network.
- Figure 2: is a block schematic of the relevant parts of a first portable communication device in figure 1.
- Figure 3: is a block schematic of the relevant parts of a chat server in figure 1.
- Figure 4: depicts a flow chart of the method steps performed in a first portable communication device.
- Figure 5: depicts a flow chart of the method steps performed in a chat server.
- Figure 6: shows a CD ROM disc on which program code for executing a method according to the invention is provided.

### DETAILED DESCRIPTION OF EMBODIMENTS

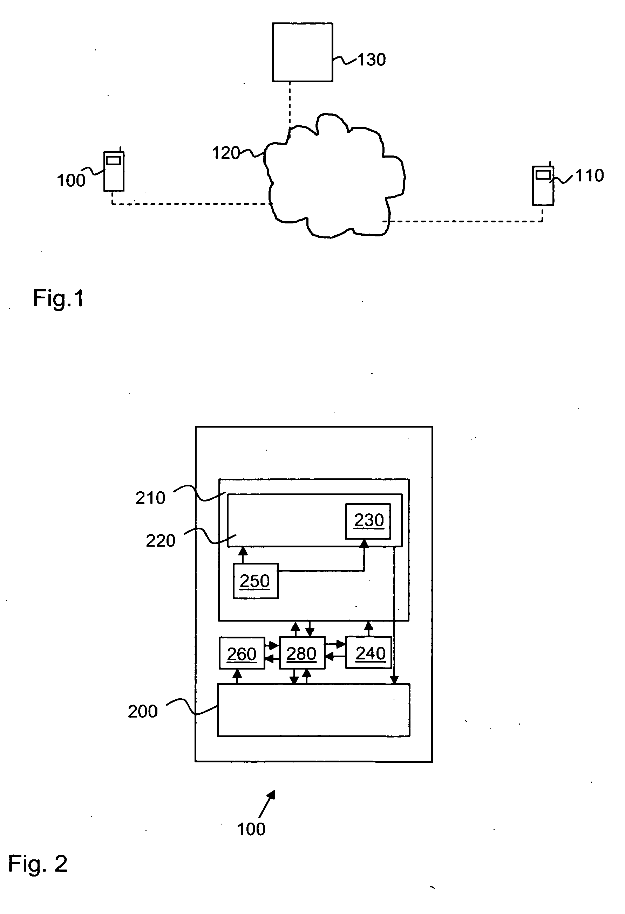

**Figure 1** schematically shows a first portable communication device 100 from now on called the first device 100, communicating with a second portable communication device 110 from now on called the second device 110 via a infrastructure network 120. The network 120 may e.g. be any network such as e.g. the Internet. The first and second communication devices 100 and 110 may be of the same type or different type of a portable communication device that are capable of communicating with the network 120 and send messages as well as engage in communication sessions involving instant messaging, i.e. so-called chatting. For example the first and second communication devices 100 and 110 may be a mobile phone or a personal digital assistant. The network 120 comprises a network based chat server 130, which is capable of managing "chat rooms". The expression that the user of the first device 100 is chatting with the other user of the second device 110 is in this document defined as the user communicating with the other user, using text messages, voice or video communication. A chat room is in this document defined as a virtual room which contains a number of chatters. In order to chat with each other, two users has to be in the same chat room. The user of the first device 100 is capable of chat with at least one other user of any second device 110 in a chat room within the chat server 130.

**Figure 2** shows a schematic view of the first device 100. It should however be realised that the second device 110 can look the same, why this view is applicable also for this device.

The first device 100 comprises a chat client 200 adapted to arrange for a set up of a chat session between the user of the first device 100 and at least one other user of any second device 110 in a chat room, using text messages, voice or video communication.

The first device 100 further comprises one or more activity applications 210 such as e.g. a music player, a video player, a video game engine, a camera application, a camcorder application, the web browser, the TV application, the main application of the device e.g. the desktop, standby menu etc. Each of the activity applications 210 is settable in one or more states, X, Y, Z, e.g. playing a specific song with a specific artist when the activity application 210 is a music player.

Each of the activity applications 210 comprises a chat start application 220 adapted to trigger the chat client 200 to start a chat session between the first device 100 and the at least one other user of any second device 110. The chat starting application 220 comprises a keyword generating unit 230 that generates specific keywords K, L, M, each being associated with a state X, Y, Z, of an ongoing application 210.

For example, if the ongoing activity application 210 is a music player and the state is that a specific artist singing a specific song is played, the keyword generating unit 230 generates a specific keyword K associated with that specific application state that in this example is the played artist singing the specific song. In the same way, if another specific song with the same specific artist is played, another specific keyword L is generated associated with the played artist singing the other specific song. It is also possible that the keyword generating unit 230 generates a specific keyword M associated only to the played artist or only to the specific song.

Other examples are: if the application 210 is a video game engine, a specific keyword is generated, associated with the played game title and played game genre; if the application 210 is a web browser, a specific keyword is generated, associated with a displayed Uniform Resource Locator (URL); and if the application 210 is a main application, a specific keyword is generated, associated with a registered position of the first device such as longitude and latitude an activated user profile such as meeting, office or outdoors.

The activity application 210 comprises a first input means 240 such as e.g. a keypad, a button, or a screen icon, which input means, when activated by the user, triggers the start up of the activity application 210 i.e. so that the user starts e.g. the music player. The first input means 240 or any other input means is arranged such that the user of the first device100 can select a specific state X and can activate that specific state X of the activity application 210, e.g. play a song sung by a specific artist. When the specific state X is activated, the user of the first device 100 wishes to chat with another user that has activated the same state X of an activity application. Therefore the chat start application 220 in turn, also comprises a second input means 250 such as e.g. a keypad, a button, or a screen icon, which input means, when activated by the user, triggers the generating of a specific keyword K, associated with the state X of the started activity application 210 and triggers the chat client 200 to start up a chat session between the first device 100 and the at least one other user of any second device 110.

The first and/or second devices 100 and 110 are which are portable devices, communicates via a radio access network such as e.g. WCDMA network, a GPRS or a GSM network or any third generation cellular network. One embodiment of the present invention is the Sony Ericsson W900 cellular phone, which is able to connect to the Internet using Universal Mobile Telecommunications System (UMTS) and also comprising the activity application such as a camera, a video player, a music player, Java video game capabilities and a web browser. It is not necessary that the chatting devices have equal activity functionality.

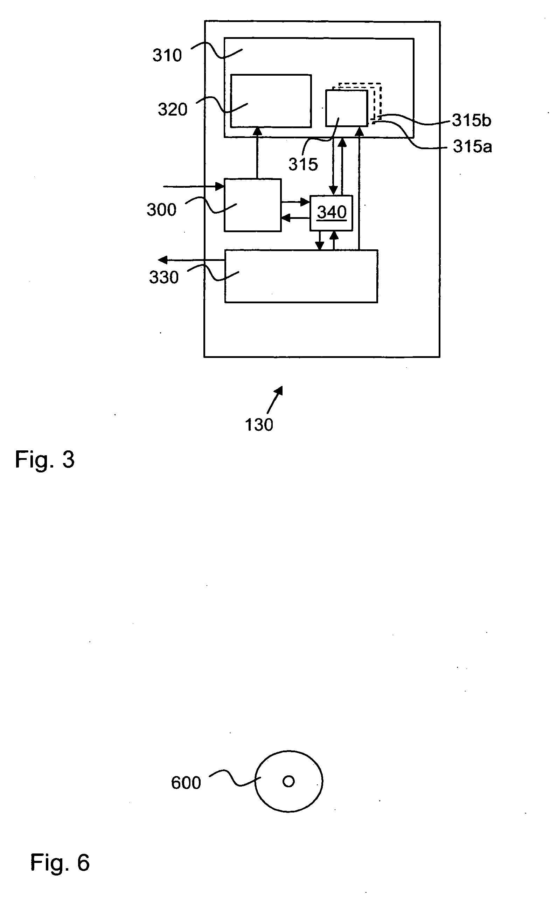

**Figure 3** shows a schematic view of an arrangement in the chat server 130. The chat server 130 comprises a chat request receiving unit 300 that is adapted to receive the chat session request from the connecting chat client of the first device 100. The request comprises the specific keyword K associated with the state X of the activated activity application 210 in the first device 100, the identity of the user of the first device 100 and possibly also the password of user. The chat server 130 further comprises a chat room managing unit 310, which is adapted to manage several chat rooms 315, 315 a, 315 b. The chat room managing unit 310 comprises a keyword processing unit 320 that is adapted to process the received keyword K from the connecting chat client and identifies the keyword K and which state X of the activated activity application 210 the keyword K is associated with. The chat managing unit 310 is adapted to create a chat room 315 that is associated with the specific state X of the activated activity application 210 identified by the keyword processing unit 320. The chat room managing unit 310 first inquires whether a specific chat room 315 that is associated with the specific state X of an activity application activated by another user already exists before creating one. If no such specific chat room 315 exists, a such specific chat room 315 will be created and the chat room 315, and the user of the first device 100 will be entered into the specific chat room 315 as the first chatter in that specific chat room 315.

In a subsequent scenario, the chat request receiving unit 300 receives a chat request from another user of a second device 110, the request comprising a keyword L associated with the same state X as the first device 100 of an activated application of same type as the in the first device 100. The keyword processing unit 320 processes the received keyword L from the connecting chat client of the second device 110 and identifies the keyword L and which state X the activated activity application 210is set in. The chat room managing unit 310 inquires whether a specific chat room 315 that is associated with the specific state X of an activity application activated by another user already exists. In this case such a specific chat room 315 already exists in which chat room the user of the first device has entered to; and no new chat room will therefore be created. A chat session is set up, 330 between the second device 110 and the first device 100, which may be performed by the chat session unit 320. The other user of the second device 110 now has the possibility to chat with the user of the first device 100 in the specific chat room 315 that is associated with the specific state X of the activated activity application 210 identified by the keyword processing unit 320.

It is of no importance for the present invention whether the communication between the first device 100 and the second device 110 is performed via the chat server 130 or peer-to-peer. In this way the keyword will define which chat room to enter for a chat requesting user. In other words, if two users of communication devices which contain software for the procedure activates the procedure during the same activity they will end up in a common chat session. There is no limit for the amount of distinguishable activities and thus no limit for the amount of different potential chat sessions. There is furthermore no limit to the number of users engaged in the same chat session.

These arrangements means that depending on which application is starting the chat client the user will end up in a certain chat room. The application which generates the keyword is also allowed to make it depend on any state in the application. It is also possible that an existing chat client on a device is modified so as to provide the solution according to the present invention.

This also means that while the user is using an application with a certain state in the device and that application is capable to generate a keyword and start the chat client according to this invention, it is possible for the user to start a chat session with whoever also using an corresponding application with an equivalent state and has started the chat client in this state.

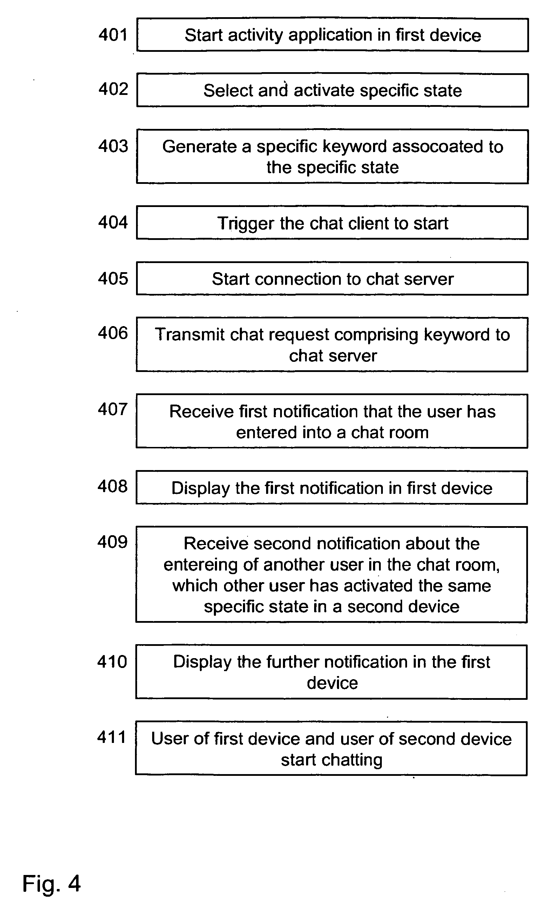

An embodiment of the present method steps performed in the first device 100 will now be described with reference to the flow chart in **Figure 4**. The method comprises the steps of:

| | |
|---|---|
| 401. | The activity application 210 in the first device 100 is activated by the user and the activity application enters an idle state. E.g., a music player in a mobile phone is activated, the music player enters the state <IDLE>. |
| 402. | The user selects and activates a specific state of the activity application 210. The activity application 210 enters the activated state, which means that the activity application 210 is set in a specific state. E.g. the user selects the song Talk by Coldplay and then starts playing it. The music player enters state <PLAY ARTIST="Coldplay" SONG="Talk"> |
| 403. | When the user wishes to chat he/she activates the second input means 250 which activation triggers the chat start application to generate a specific keyword associated with the specific state of the activity application 210. |
| 404. | The activated second input means further triggers the chat client 200 to start with the specific keyword as a parameter. |
| 405. | The chat client 200 starts a network connection and then a connection to the chat server 130. |
| 406. | The chat client 200 sends a chat request to the chat server 130. The request comprises the specific keyword and may comprise also the user name and password of the user. |

| | |
|---|---|
| 407. | The chat client 200 receives a first notification from the chat server 130, the first notification comprising information about a created specific chat room in the chat server. The specific chat room 315 is associated with the specific state of the activity application defined by the specific keyword. The first notification further comprises information that the user has entered into the specific chat room 315. |
| 408. | The chat room 315 is displayed to the user of the first device 100, e.g. shown in a display of the first device 100. |
| 409. | The chat client 200 receives a second notification from the chat server 130. The second notification comprises information whether another user of a second device 110 being in the specific chat room 315 associated with the specific state of the activity application 210, which other user has activated the same specific state of an activity application in the second device 110. |
| 410. | An identity of the other user being in the specific chat room is displayed to the user of the first device 100, e.g. shown in a display of the first device 100. |
| 411. | A chat session is set up between the first device 100 and second device 110 and the user of the first device 100 and the other user of the second device 110 start chatting. |

To perform the steps according to method, the first device 100 comprises an arrangement as depicted in Figure 2. The first device arrangement comprises a chat client 200 and an activity application 210, which activity application 210 is settable in a state. The activity application comprises a chat start application 220. The first device is adapted to connect to a chat server 130 via an infrastructure network 120. The first device arrangement comprises a first input means 240 adapted to activate the activity application and the first input means or any other input means is adapted to set the activated activity application in a specific state. The activity application 210 comprises a second input means 250 for activating the chat start application 220, which when activated is adapted to trigger a keyword generating unit 230 to create a specific keyword associated with the activated activity application set in a specific state, and which further when activated is adapted to trigger the chat client 200 to send a chat request to the chat server, which request comprises the specific keyword.

The chat client 200 may be adapted to receive a first notification from the chat server 130. The first notification may comprise information about a created specific chat room 315 in the chat server 130. (The chat room 315 is shown in figure 3.) The specific chat room 315 is associated with the specific state of the activity application defined by the specific keyword. The first notification may further comprise information that the user of the first device 100 has entered into the specific chat room 315. The chat client 200 may further be adapted to receive a second notification from the chat server 130, the second notification comprising information about another user of a second device 110 being in the specific chat room 315, which other user has activated the same specific state of an activity application in the second device 110. The chat client may further be adapted to set up a chat session between the first device 100 and the second device 110 in the specific chat room 315.

The first device arrangement may further comprise a displayer 260 adapted to display the specific chat room to the user of the first device and may further display an identity of the other user being in the specific chat room 315.

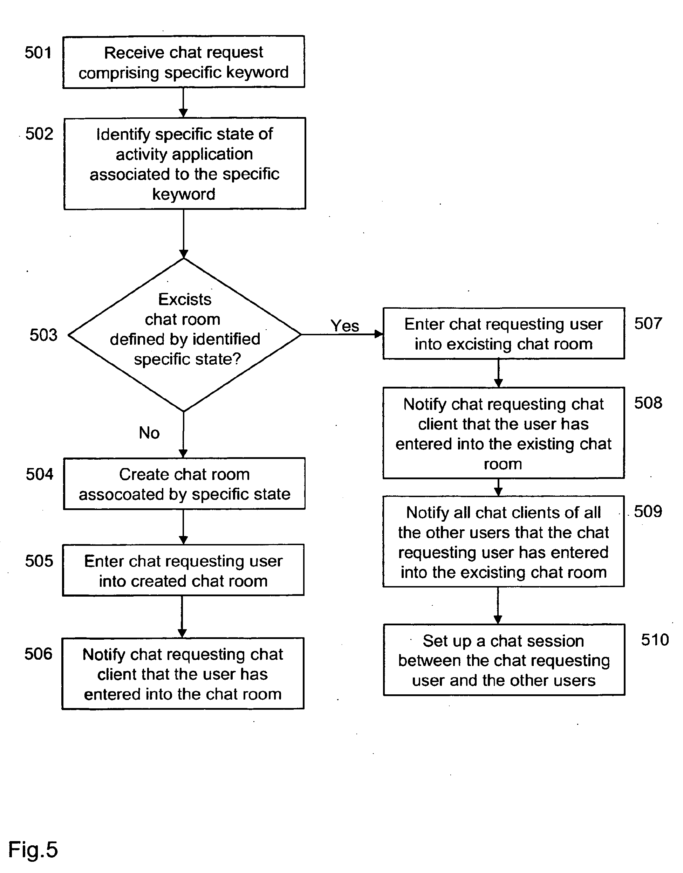

The method steps performed in the chat server 130 will now be described with reference to the flow chart in **Figure 5**. The method comprises the steps of:

| | |
|---|---|
| 501. | The chat request receiving unit 300 in the chat server 130 receives a chat request from a chat client in the first device 100. The request comprises the specific keyword associated with the specific state of an activity application that is activated in the first device 100 and the request may further comprise the username and password of the user of the first device 100. |
| 502. | The specific keyword is processed within the keyword processing unit 320 such as to identify the specific state of the activity application associated with the keyword. |
| 503. | The keyword processing unit 320 searches if any specific chat room associated with the activity application set in the specific state already exits within the chat server 130, which chat room, if it exists, comprises at least one other user of a second portable communication device 110, that has activated an activity application set in the same specific state as the user of the first device. |
| 504. | If no specific chat room defined by the specific keyword is found according to step 502, the chat room managing unit 310 in the chat server 130 creates a specific chat room 315 that is associated with the specific state of the activity application according to the specific keyword. |
| 505. | The chat room managing unit 310 enters the user of the first device 100 into the chat room 315. |
| 506. | The chat room managing unit 310 sends a first notification to the chat client of the first device 100. The first notification comprises information about the created specific chat room 315 being associated with the specific state of the activity application and that the user of the first device 100 has entered the created specific chat room 315. |

| | |
|---|---|
| 507. | If the specific chat room 315 defined by the specific keyword is found in the search according to step 502, the chat room managing unit 310 enters the user of the first device 100 into the chat room 315. |
| 508. | The chat room managing unit 310 sends a first notification to the chat client of the first device 100. The notification comprises information about the existing specific chat room 315 being associated with the specific state of the activity application, that the user of the first device 100 has entered the existing specific chat room, and that the at least one other user of the second device 110 also is in the existing specific chat room 315. |
| 509. | The chat room managing unit 310 sends a second notification to each of the chat clients of the at least one second device 110. The second notification comprising information that the user of the first device 100 has entered the specific chat room 315. |
| 510. | The chat session unit 330 sets up a chat session between the user of the first device 100 and the at least one other user of the second device 110. |

To perform the steps of the method, the chat server 130 comprises an arrangement as depicted in Figure 3. The chat server is comprised in an infrastructure network 120. The chat server 130 is adapted to communicate with a chat client in a first portable communications device 100 via the infrastructure network 120. The chat server 120 may also be adapted to communicate with a chat client in at least one second portable communications device 110, via the infrastructure network 120. The chat server arrangement comprises a chat request receiving unit 300 adapted to receive from the chat client of the first device, a chat request comprising a specific keyword. The specific keyword is associated with an activated activity application set in a specific state by a user of the first device.

The chat server arrangement comprises a keyword processing unit 320 adapted to identify the specific state of the activity application associated with the specific keyword.

The chat server arrangement may further comprise a chat room managing unit 310 adapted to create a specific chat room 315 associated with the specific state of the activity application according to the specific keyword, and may be adapted to enter the chat requesting user into the created specific chat room 315. The chat room managing unit 310 may further be adapted to send a first notification to the chat client of the first device 100, the first notification comprising information about the created specific chat room 315 being associated with the specific state of the activity application and that the user of the first device 100 has entered the created specific chat room 315.

The chat room managing unit 310 may also be adapted to search if any specific chat room 315 associated with the activated activity application set in the specific state already exits within the chat server 130 before the method step of creating one. The, specific chat room, if it exists, comprises at least one other user of a second portable communication device 110, that has activated an activity application set in the same specific state as the user of the first device 100. The chat room managing unit 310 is further adapted to enter the user of the first device into the existing specific chat room if a specific chat room exists.

The chat room managing unit 310 is further adapted to send a first notification to the chat client of the first device. The first notification may comprise information about the existing specific chat room being associated with the specific state of the activity application, that the user of the first device has entered the chat room and that the at least one other user of the second device also is in the specific chat room 315. The chat room managing unit 310 may further be adapted to send a second notification to each of the chat clients of the at least one second device 110. The second notification comprises information that the user of the first device 100 has entered the specific chat room 315.

The chat server arrangement further comprises a chat session unit 330 adapted to set up a chat session between the user of the first device 100 and the at least one other user of the second device 110.

The present methods can be implemented through one or more processors, such as the processor 260 first device arrangement depicted in Figure 2 and the processor 340 in the chat server arrangement depicted in Figure 3, together with computer program code for performing the functions of the invention. The program code mentioned above may also be provided as a computer program product, for instance in the form of a data carrier carrying computer program code for performing the present methods, when being loaded into first device and/or the chat server. One such carrier 600, in the form of a CD ROM disc is generally outlined in **Figure 6****.** It is however feasible with other data carriers such as a memory stick. The computer program code can furthermore be provided as pure program code on a server and downloaded to the access point and/or user equipment remotely.
The present invention is not limited to the above-describe preferred embodiments. Various alternatives, modifications and equivalents may be used. Therefore, the above embodiments should not be taken as limiting the scope of the invention, which is defined by the appending claims.

## Claims

1. Method in a first mobile phone (100), for managing a chat room, the fist mobile phone comprising a chat client and an activity application, the activity application being a music player, a video player, a video game engine, a camera application or a camcorder application, which activity application comprises a chat start application, the first mobile phone being adapted to connect to a chat server via an infrastructure network, the method comprising the steps of:
*activating* (401) the activity application;
*selecting* (402) a specific state of the activity application and *start playing* the specific state;
*activating* (403) the chat start application which triggers (404) the creation of a specific keyword associated with the activated activity application playing the specific state, and which further triggers the chat client to send (406) a chat request to the chat server, which request comprises the specific keyword.

2. Method according to claim 1, comprising the further step of:
*receiving* (407)a first notification from the chat server, the first notification comprising information about a specific chat room in the chat server, the specific chat room being associated with the specific state of the activity application defined by the specific keyword.

3. Method according to any of the claims 1-2, wherein said first notification further comprises information that the user of the first mobile phone has entered the specific chat room.

4. Method according to any of the claims 1-3, comprising the further step of: displaying the specific chat room to the user of the first mobile phone.

5. Method according to any of the claims 1-4, comprising the further step of: *receiving* (409) a second notification from the chat server, the second notification comprising information about another user of a second device being in the specific chat room, which other user plays the same specific state of an activity application in the second device.

6. Method according to claim 5, comprising the further step of:
*displaying* (410) an identity of the other user being in the specific chat room.

7. An arrangement in a first mobile phone (100), the arrangement comprising a chat client (200) and an activity application (210), which activity application is settable in a state, and which activity application comprises a chat start application (220), the first mobile phone being adapted to connect to a chat server via a infrastructure network, **characterized by** the activity application being a music player, a video player, a video game engine, a camera application or a camcorder application, said first mobile phone arrangement further comprising a first input means (240) adapted to activate the activity application and which first input means or any other input means is adapted to select a specific state of the activity application and start play the specific state; the activity application comprising a second input means (250) for activating the chat start application, which when activated is adapted to trigger a keyword generating unit (230) to create a specific keyword associated with the activated activity application playing the specific state, and which further when activated, is adapted to trigger the chat client to send a chat request to the chat server, which request comprises the specific keyword.

8. Method in a chat server (130), for managing a chat room, which chat server is comprised in a infrastructure network and which chat server is adapted to communicate with a chat client in a first mobile phone (100) via the infrastructure network, the first mobile phone comprising an activity application being a music player, a video player, a video game engine, a camera application or a camcorder application, the method comprising the steps of:
*receiving* (501) from the chat client of the first mobile phone, a chat request comprising a specific keyword, which specific keyword is associated with an activated activity application playing a specific state by a user of the first mobile phone,
*creating* (504) a specific chat room associated with the specific state of the activity application according to the specific keyword, if no such chat room already exists.

9. Method according to claim 8, comprising the further step of:
*identifying* (502) the specific state of the activity application associated with the specific keyword.

10. Method according to any of the claims 8-9, comprising the further step of: *entering* (505) the chat requesting user into the created specific chat room.

11. Method according to any of the claims 8-10, comprising the further step of: *sending* (506) a first notification to the chat client of the first mobile phone, the first notification comprising information about the created specific chat room being associated with the specific state of the activity application and that the user of the first mobile phone has entered the created specific chat room.

12. Method according to any of the claims 8-11, comprising the further step of: *searching* (503) if any specific chat room associated with the activated activity application playing the specific state already exits within the chat server, which specific chat room, if it exists, comprises at least one other user of a second portable communication device, that has activated an activity application set in the same specific state as the user of the first mobile phone.

13. Method according to claim 12, comprising the further step of:
if a specific chat room exists, *entering* (507) the user of the first mobile phone into the existing specific chat room.

14. Method according to claim 13, comprising the further step of:
*sending* (508) a first notification to the chat client of the first mobile phone, the first notification comprising information about the existing specific chat room being associated with the specific state of the activity application, that the user of the first mobile phone has entered the chat room and that the at least one other user of the second device also is in the specific chat room.

15. Method according to any of the claims 13-14, wherein the chat server is adapted to communicate with a chat client in at least one second portable communications device via the infrastructure network, the method comprising the further step of:
*sending* (509) a second notification to each of the chat clients of the at least one second device, the notification comprising information that the user of the first mobile phone has entered the specific chat room.

16. Method according to any of the claims 12-15, comprising the further step of: *setting up* (510) a chat session between the user of the first mobile phone and the at least one other user of the second device.

17. An arrangement in a chat server(130), which chat server is comprised in a infrastructure network and which chat server is adapted to communicate with a chat client in a first mobile phone (100) via the infrastructure network, **characterized by** the first mobile phone comprising an activity application being a music player, a video player, a video game engine, a camera application or a camcorder application, the chat server arrangement comprising a chat request receiving unit (300) adapted to receive from the chat client of the first mobile phone, a chat request comprising a specific keyword, which specific keyword is associated with an activated activity application playing a specific state by a user of the first mobile phone, and a chat room managing unit (310) adapted to create a specific chat room associated with the specific state of the activity application according to the specific keyword.

## Patentansprüche

1. Verfahren in einem ersten Mobiltelefon (100) zur Verwaltung eines Chatraums, wobei das erste Mobiltelefon einen Chat-Client und eine Aktivitätsanwendung in Form eines Musikabspielgeräts, eines Videoplayers, einer Videospielmaschine, einer Kamera- oder Camcorder-Anwendung sowie eine Chat-Startanwendung aufweist und über ein Infrastrukturnetz eine Verbindung mit einem Chat-Server herstellen kann, und das Verfahren folgende Schritte aufweist:
*Aktivierung* (401) der Aktivitätsanwendung;
*Auswahl* (402) eines spezifischen Zustands der Aktivitätsanwendung und *Beginn der Wiedergabe* des spezifischen Zustands;
*Aktivierung* (403) der Chat-Startanwendung, welche die Erzeugung eines mit der aktivierten, den spezifischen Zustand wiedergebenden Aktivitätsanwendung verknüpften spezifischen Schlüsselworts veranlasst (404) und weiterhin den Chat-Client veranlasst, eine das spezifische Schlüsselwort enthaltende Chat-Anforderung an den Chat-Server zu übertragen (406).

2. Verfahren nach Anspruch 1, welches folgenden weiteren Schritt aufweist:
*Empfang* (407) einer ersten Benachrichtigung vom Chat-Server, welche Informationen über einen spezifischen Chatraum im Chat-Server enthält, wobei der spezifische Chatraum einem durch das spezifische Schlüsselwort definierten spezifischen Zustand der Aktivitätsanwendung zugeordnet ist.

3. Verfahren nach einem der Ansprüche 1 bis 2, wobei die erste Benachrichtigung vom Chat-Server weiterhin die Information enthält, dass der Nutzer des ersten Mobiltelefons den spezifischen Chatraum betreten hat.

4. Verfahren nach einem der Ansprüche 1 bis 3, welches folgenden weiteren Schritt aufweist:
Darstellung des spezifischen Chatraums für den Nutzer des ersten Mobiltelefons.

5. Verfahren nach einem der Ansprüche 1 bis 4, welches folgenden weiteren Schritt aufweist:
*Empfang* (409) einer zweiten Benachrichtigung vom Chat-Server, welche Informationen über einen weiteren Nutzer eines zweiten Geräts enthält, welcher sich in dem spezifischen Chatraum befindet und den gleichen spezifischen Zustand einer Aktivitätsanwendung im zweiten Gerät wiedergibt.

6. Verfahren nach Anspruch 5, welches folgenden weiteren Schritt aufweist:
*Darstellung* (410) einer Identität des weiteren Nutzers in dem spezifischen Chatraum.

7. Anordnung in einem ersten Mobiltelefon (100), welche einen Chat-Client (200) und eine auf einen Zustand einstellbare Aktivitätsanwendung (210) sowie eine Chat-Startanwendung (220) aufweist, wobei das erste Mobiltelefon über ein Infrastrukturnetz eine Verbindung zu einem Chat-Server herstellen kann, **dadurch gekennzeichnet, dass** die Aktivitätsanwendung ein Musikabspielgerät, ein Videoplayer, eine Videospielmaschine, eine Kamera- oder Camcorderanwendung ist und die Anordnung in dem ersten Mobiltelefon weiterhin ein erstes Eingabemittel (240) aufweist, über das die Aktivitätsanwendung aktiviert und über das oder über ein anderes Eingabemittel ein spezifischer Zustand der Aktivitätsanwendung ausgewählt und wiedergegeben werden kann; und die Aktivitätsanwendung ein zweites Eingabemittel (250) zur Aktivierung der Chat-Startanwendung aufweist, welche nach ihrer Aktivierung eine Schlüsselwort-Erzeugungseinheit (230) veranlassen kann, ein mit der aktivierten, den spezifischen Zustand wiedergebenden Aktivitätsanwendung verknüpftes spezifisches Schlüsselwort zu erzeugen, und welche nach ihrer Aktivierung weiterhin den Chat-Client veranlassen kann, eine das spezifische Schlüsselwort enthaltende Chat-Anforderung an den Chat-Server zu übertragen.

8. Verfahren in einem Chat-Server (130) zur Verwaltung eines Chatraums, wobei der Chat-Server in einem Infrastrukturnetz enthalten ist und über das Infrastrukturnetz mit einem Chat-Client in einem ersten Mobiltelefon (100) kommunizieren kann, wobei das erste Mobiltelefon eine Aktivitätsanwendung in Form eines Musikabspielgeräts, eines Videoplayers, einer Videospielmaschine, einer Kamera- oder Camcorderanwendung enthält und das Verfahren folgende Schritte aufweist:
*Empfang* (501) einer Chat-Anforderung vom Chat-Client des ersten Mobiltelefons mit einem spezifischen Schlüsselwort, das mit einer aktivierten Aktivitätsanwendung verknüpft ist, die einen von einem Nutzer des ersten Mobiltelefons eingestellten spezifischen Zustand wiedergibt,
*Erzeugung* (504) eines spezifischen Chatraums, der dem von dem spezifischen Schlüsselwort definierten spezifischen Zustand der Aktivitätsanwendung zugeordnet ist, falls ein solcher Chatraum nicht bereits vorhanden ist.

9. Verfahren nach Anspruch 8, welches folgenden weiteren Schritt aufweist:
*Identifizierung* (502) des spezifischen Zustands der mit dem spezifischen Schlüsselwort verknüpften Aktivitätsanwendung.

10. Verfahren nach einem der Ansprüche 8-9, welches folgenden weiteren Schritt aufweist:
*Eintritt* (505) des den Chat anfordernden Nutzers in den erzeugten spezifischen Chatraum.

11. Verfahren nach einem der Ansprüche 8-10, welches folgenden weiteren Schritt aufweist:
*Übertragung* (506) einer ersten Benachrichtigung an den Chat-Client des ersten Mobiltelefons, welche Informationen über den erzeugten, dem spezifischen Zustand der Aktivitätsanwendung zugeordneten spezifischen Chatraum sowie die Information enthält, dass der Nutzer des ersten Mobiltelefons den erzeugten spezifischen Chatraum betreten hat.

12. Verfahren nach einem der Ansprüche 8-11, welches folgenden weiteren Schritt aufweist:
*Suche* (503), ob im Chat-Server schon ein spezifischer Chatraum vorhanden ist, welcher der aktivierten, den spezifischen Zustand wiedergebenden Aktivitätsanwendung zugeordnet ist, und ob sich in dem spezifischen Chatraum, falls vorhanden, mindestens ein weiterer Nutzer eines zweiten tragbaren Kommunikationsgeräts befindet, der eine auf den gleichen spezifischen Zustand eingestellte Aktivitätsanwendung aktiviert hat wie der Nutzer des ersten Mobiltelefons.

13. Verfahren nach Anspruch 12, welches folgenden weiteren Schritt aufweist:
Falls ein Chatraum vorhanden ist, *Eintritt* (507) des Nutzers des ersten Mobiltelefons in den vorhandenen spezifischen Chatraum.

14. Verfahren nach Anspruch 13, welches folgenden weiteren Schritt aufweist: *Übertragung* (508) einer ersten Benachrichtigung an den Chat-Client des ersten Mobiltelefons, welche Informationen über den vorhandenen, dem spezifischen Zustand der Aktivitätsanwendung zugeordneten spezifischen Chatraum sowie die Information enthält, dass der Nutzer des ersten Mobiltelefons den Chatraum betreten hat und dass der mindestens eine weitere Nutzer des zweiten Geräts sich ebenfalls in dem spezifischen Chatraum befindet.

15. Verfahren nach einem der Ansprüche 13-14, wobei der Chat-Server über das Infrastrukturnetz mit einem Chat-Client in mindestens einem zweiten tragbaren Kommunikationsgerät kommunizieren kann, und das Verfahren folgenden weiteren Schritt aufweist:
*Übertragung* (509) einer zweiten Benachrichtigung an jeden der Chat-Clients des mindestens einen zweiten Geräts, welche die Information enthält, dass der Nutzer des ersten Mobiltelefons den spezifischen Chatraum betreten hat.

16. Verfahren nach einem der Ansprüche 12-15, welches folgenden weiteren Schritt aufweist:
*Aufbau* (510) einer Chat-Sitzung zwischen dem Nutzer des ersten Mobiltelefons und dem mindestens einen weiteren Nutzer des zweiten Geräts.

17. Anordnung in einem Chat-Server (130), welcher in einem Infrastrukturnetz enthalten ist und über das Infrastrukturnetz mit einem Chat-Client in einem ersten Mobiltelefon (100) kommunizieren kann, **dadurch gekennzeichnet, dass** das erste Mobiltelefon eine Aktivitätsanwendung in Form eines Musikabspielgeräts, eines Videoplayers, einer Videospielmaschine, einer Kamera- oder Camcorderanwendung aufweist, wobei die Chat-Serveranordnung eine Chat-Anforderungsempfangseinheit (300) enthält, die vom Chat-Client des ersten Mobiltelefons eine Chat-Anforderung mit einem spezifischen Schlüsselwort empfangen kann, das mit einer aktivierten Aktivitätsanwendung verknüpft ist, die einen durch einen Nutzer des ersten Mobiltelefons eingestellten spezifischen Zustand wiedergibt, sowie eine Chatraum-Verwaltungseinheit (310) enthält, die einen spezifischen Chatraum erzeugen kann, der dem durch das spezifische Schlüsselwort definierten spezifischen Zustand der Aktivitätsanwendung zugeordnet ist.

## Revendications

1. Procédé, dans un premier téléphone mobile (100), de gestion d'un lieu de discussion, le premier téléphone mobile comprenant un client de discussion et une application d'activité, l'application d'activité étant un lecteur de musique, un lecteur de vidéo, un moteur de jeu vidéo, une application d'appareil photo ou une application de camescope, laquelle application d'activité comprend une application de démarrage de discussion, le premier téléphone mobile étant apte à se connecter à un serveur de discussion via un réseau d'infrastructure, le procédé comprenant les étapes :
d'activation (401) de l'application d'activité ;
de choix (402) d'un état spécifique de l'application d'activité et de démarrage de l'exécution de l'état spécifique ;
d'activation (403) de l'application de début de discussion qui déclenche (404) la création d'un mot de passe spécifique associé à l'application d'activité activée exécutant l'état spécifique, et qui déclenche en outre le client de discussion pour envoyer (406) une demande de discussion au serveur de discussion, laquelle demande comprend le mot de passe spécifique.

2. Procédé selon la revendication 1, comprenant l'étape supplémentaire :
de réception (407) d'une première notification provenant du serveur de discussion, la première notification comprenant de l'information au sujet d'un lieu spécifique de discussion du serveur de discussion, le lieu spécifique de discussion étant associé à l'état spécifique de l'application d'activité défini par le mot de passe spécifique.

3. Procédé selon l'une quelconque des revendications 1 et 2, dans lequel ladite première notification comprend en outre l'information que l'utilisateur du premier téléphone mobile est entré dans le lieu spécifique de discussion.

4. Procédé selon l'une quelconque des revendications 1 à 3, comprenant l'étape supplémentaire :
d'affichage du lieu spécifique de discussion pour l'utilisateur du premier téléphone mobile.

5. Procédé selon l'une quelconque des revendications 1 à 4, comprenant l'étape supplémentaire :
de réception (409) d'une seconde notification provenant du serveur de discussion, la seconde notification comprenant de l'information au sujet d'un autre utilisateur d'un second dispositif qui est dans le lieu spécifique de discussion, lequel autre utilisateur exécute dans le second dispositif le même état spécifique d'une application d'activité.

6. Procédé selon la revendication 5, comprenant l'étape supplémentaire :
d'affichage (410) de l'identité de l'autre utilisateur qui est dans le lieu spécifique de discussion.

7. Agencement dans un premier téléphone mobile (100), l'agencement comprenant un client (200) de discussion et une application (210) d'activité, laquelle application d'activité peut être mise dans un certain état, et laquelle application d'activité comprend une application (220) de démarrage de discussion, le premier téléphone mobile étant apte à se connecter un serveur de discussion via un réseau d'infrastructure, **caractérisé en ce que** l'application d'activité est un lecteur de musique, un lecteur de vidéo, un moteur de jeu vidéo, une application d'appareil photo ou une application de caméscope, ledit premier agencement de téléphone mobile comprenant en outre un premier moyen (240) d'entrée apte à activer l'application d'activité et lequel premier moyen d'entrée ou n'importe quel autre moyen d'entrée est apte à choisir un état spécifique de l'application d'activité et à démarrer l'exécution de l'état spécifique ; l'application d'activité comprenant un second moyen (250) d'entrée destiné à activer l'application de démarrage de discussion, qui, lorsqu'elle est activée, est apte à déclencher une unité (230) génératrice de mot de passe pour créer un mot de passe spécifique associé à l'application d'activité activée exécutant l'état spécifique, et qui en outre lorsqu'il est activé est apte à déclencher l'envoi par le client de discussion d'une demande de discussion au serveur de discussion, laquelle demande comprend le mot de passe spécifique.

8. Procédé, dans un serveur (130) de discussion, de gestion d'un lieu de discussion, lequel serveur de discussion est compris dans un réseau d'infrastructure et lequel serveur de discussion est apte à communiquer avec un client de discussion d'un premier téléphone mobile (100) via le réseau d'infrastructure, le premier téléphone mobile comprenant une application d'activité qui est un lecteur de musique, un lecteur de vidéo, un moteur de jeu vidéo, une application d'appareil photo ou une application de camescope, le procédé comprenant les étapes :
de réception (501), en provenance du client de discussion du premier téléphone mobile, d'une demande de discussion comprenant un mot de passe spécifique, lequel mot de passe spécifique est associé à une application d'activité activée exécutant un état spécifique par un utilisateur du premier téléphone mobile ;
de création (504) d'un lieu spécifique de discussion associé à l'état spécifique de l'application d'activité en fonction du mot de passe spécifique, s'il n'existe pas déjà un tel lieu de discussion.

9. Procédé selon la revendication 8, comprenant l'étape supplémentaire :
d'identification (502) de l'état spécifique de l'application d'activité associée au mot de passe spécifique.

10. Procédé selon l'une quelconque des revendications 8 et 9, comprenant l'étape supplémentaire :
d'entrée (505) de l'utilisateur demandeur de discussion dans le lieu spécifique de discussion créé.

11. Procédé selon l'une quelconque des revendications 8 à 10, comprenant l'étape supplémentaire :
d'envoi (506) d'une première notification au client de discussion du premier téléphone mobile, la première notification comprenant de l'information au sujet du lieu spécifique de discussion créé qui est associé à l'état spécifique de l'application d'activité et de ce que l'utilisateur du premier téléphone mobile est entré dans le lieu spécifique de discussion créé.

12. Procédé selon l'une quelconque des revendications 8 à 11, comprenant l'étape supplémentaire :
de recherche (503) de ce qu'il existe déjà ou non à l'intérieur du serveur de discussion un lieu spécifique de discussion associé à l'application de d'activité activée exécutant l'état spécifique, lequel lieu spécifique de discussion, s'il existe, comprend au moins un autre utilisateur d'un second dispositif portatif de communication, qui a activé une application d'activité mise dans le même état spécifique que l'utilisateur du premier téléphone mobile.

13. Procédé selon la revendication 12, comprenant l'étape supplémentaire :
s'il existe un lieu spécifique de discussion, d'entrée (507) de l'utilisateur du premier téléphone mobile dans le lieu spécifique existant de discussion.

14. Procédé selon la revendication 13, comprenant l'étape supplémentaire :
d'envoi (508) d'une première notification au client de discussion du premier téléphone mobile, la première notification comprenant de l'information au sujet du lieu spécifique existant de discussion qui est associé à l'état spécifique de l'application d'activité, de ce que l'utilisateur du premier téléphone mobile est entré dans le lieu de discussion et de ce que l'au moins un autre utilisateur du second dispositif est aussi dans le lieu spécifique de discussion.

15. Procédé selon l'une quelconque des revendications 13 et 14, dans lequel le serveur de discussion est apte à communiquer avec un client de discussion dans au moins un second dispositif portatif de communication via le réseau d'infrastructures, le procédé comprenant l'étape supplémentaire :
d'envoi (509) d'une seconde notification à chacun des clients de discussion de l'au moins un second dispositif, la notification comprenant l'information que l'utilisateur du premier téléphone mobile est entré dans le lieu spécifique de discussion.

16. Procédé selon l'une quelconque des revendications 12 à 15, comprenant l'étape supplémentaire :
d'établissement (510) d'une session de discussion entre l'utilisateur du premier téléphone mobile et l'au moins un autre utilisateur du second dispositif.

17. Agencement dans un serveur (130) de discussion, lequel serveur de discussion est compris dans un réseau d'infrastructure et lequel serveur de discussion est apte à communiquer avec un client de discussion d'un premier téléphone mobile (100) via le réseau d'infrastructure **caractérisé en ce que** le premier téléphone mobile comprend une application d'activité qui est un lecteur de musique, un lecteur de vidéo, un moteur de jeu vidéo, une application d'appareil photo ou une application de caméscope, l'agencement de serveur de discussion comprenant une unité (300) de réception de demande de discussion apte à recevoir, du client de discussion du premier téléphone mobile, une demande de discussion comprenant un mot de passe spécifique, lequel mot de passe spécifique est associé à une application d'activité activée exécutant un état spécifique par un utilisateur du premier téléphone mobile, et une unité (310) de gestion de lieu de discussion apte à créer, en fonction du mot de passe spécifique, un lieu spécifique de discussion associé à l'état spécifique de l'application d'activité.
